# EUROPEAN PATENT APPLICATION

(11) **EP 4 811 089 A1**
(43) Date of publication of application: **23.09.2026**
(21) Application number: 24891919.3
(22) Date of filing: 14.11.2024
(51) Int. Cl.: G06F 3/0481, G06F 3/0482

(54) **DATA PROCESSING GROUP SWITCHING METHOD AND DEVICE**

(30) Priority: 15.11.2023 CN 202311526594
(71) Applicant: Lemon Inc., Grand Cayman, KY1-1205 (KY)
(72) Inventor: ZHAO, Ling, Beijing 100028 (CN)
(74) Representative: Isarpatent
(86) International application number: PCT/SG2024/050734
(87) International publication number: WO 2025/106016

(57) **Abstract**

Provided in the embodiments of the present disclosure are a data processing group switching method and device. In the method, a page displayed in a graphical user interface of a terminal device comprises a first region for displaying data processing groups and a second region for displaying data processing nodes. The method comprises: in response to a first operation of a user for any data processing group in a first region, acquiring information of at least one data processing node comprised in the data processing group, wherein a plurality of data processing groups are displayed in the first region, and each data processing node comprises information for specifying a data rule; and then, displaying in a second region the information of the at least one data processing node.

## Description

The present application claims priority of the Chinese Patent Application No. 202311526594.5, filed on November 15, 2023, the disclosure of which is incorporated herein by reference in its entirety as part of the present application.

### TECHNICAL FIELD

Embodiments of the present disclosure relate to a data processing group switching method and device.

### BACKGROUND

Enterprise-level software products include a relatively large number of data lists, and a data list may be a data processing group. In each data processing group, different data processing group nodes are distributed. When a user switches the data processing group to view any data processing node in a corresponding data processing group, the user needs to frequently click to return and enter. Such an operation manner is quite complicated for the user.

Therefore, there is an urgent need for a quick switching manner between data processing groups to solve the technical problem of complicated operations when the user switches the data processing groups.

### SUMMARY

Embodiments of the present disclosure provide a data processing group switching method. A page displayed on a graphical user interface of a terminal device includes a first region for displaying data processing groups and a second region for displaying data processing nodes. The method includes:
in response to a first operation of a user on any data processing group in the first region, acquiring information of at least one data processing node included in the data processing group, where the plurality of data processing groups are displayed in the first region, and each data processing node includes information used for specifying a data rule; and
displaying the information of the at least one data processing node in the second region.

Embodiments of the present disclosure provide a data processing group switching device. A page displayed on a graphical user interface of a terminal device includes a first region for displaying data processing groups and a second region for displaying data processing nodes. The device includes an acquiring unit and a displaying unit.

The acquiring unit is configured to, in response to a first operation of a user on any data processing group in the first region, acquire information of at least one data processing node included in the data processing group, where the plurality of data processing groups are displayed in the first region, and each data processing node includes information used for specifying a data rule.

The displaying unit is configured to display the information of the at least one data processing node in the second region.

Embodiments of the present disclosure provide an electronic device. The electronic device includes: a processor and a memory,
where the memory stores computer-executable instructions; and
the processor executes the computer-executable instructions stored in the memory, to cause the at least one processor to execute the data processing group switching method described above.

Embodiments of the present disclosure provide a computer-readable storage medium storing computer-executable instructions, when the computer-executable instructions are executed by a processor, the processor is caused to implement the data processing group switching method described above.

Embodiments of the present disclosure provide a computer program product including a computer program, when the computer program is executed by a processor, the processor is caused to implement the data processing group switching method described above.

### BRIEF DESCRIPTION OF DRAWINGS

In order to more clearly describe the technical solutions in the embodiments of the present disclosure, the drawings required in the description of the embodiments will be briefly described below. Obviously, the drawings in the following description are some embodiments of the present disclosure, and for those of ordinary skill in the art, other drawings may also be obtained from these drawings without paying any creative efforts.
Fig. 1 is an interface schematic diagram of a data processing group switching method;
Fig. 2 is a first schematic diagram of a graphical user interface provided by an embodiment of the present disclosure;
Fig. 3 is a first flow schematic diagram of a data processing group switching method provided by an embodiment of the present disclosure;
Fig. 4 is a second schematic diagram of a graphical user interface provided by an embodiment of the present disclosure;
Fig. 5 is a second flow schematic diagram of a data processing group switching method provided by an embodiment of the present disclosure;
Fig. 6 is a third schematic diagram of a graphical user interface provided by an embodiment of the present disclosure;
Fig. 7 is a third flow schematic diagram of a data processing group switching method provided by an embodiment of the present disclosure;
Fig. 8 is a fourth flow schematic diagram of a data processing group switching method provided by an embodiment of the present disclosure;
Fig. 9 is a structural schematic diagram of a data processing group switching device provided by an embodiment of the present disclosure; and
Fig. 10 is a structural schematic diagram of an electronic device provided by an embodiment of the present disclosure.

### DETAILED DESCRIPTION

In order to make the objectives, technical solutions and advantages of the embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, but not all of them. Based on the embodiments in the present disclosure, all other embodiments obtained by persons of ordinary skill in the art without creative efforts fall within the scope of protection of the present disclosure.

Enterprise-level software products include a relatively large number of data lists, and a data list may be a data processing group. In each data processing group, different data processing group nodes are distributed. When a user switches the data processing group to view any data processing node in a corresponding data processing group, the user needs to frequently click to return and enter. Such an operation manner is quite complicated for the user.

The data processing node may be a review policy code used for reviewing data uploaded to a server, which is maintained by technicians.

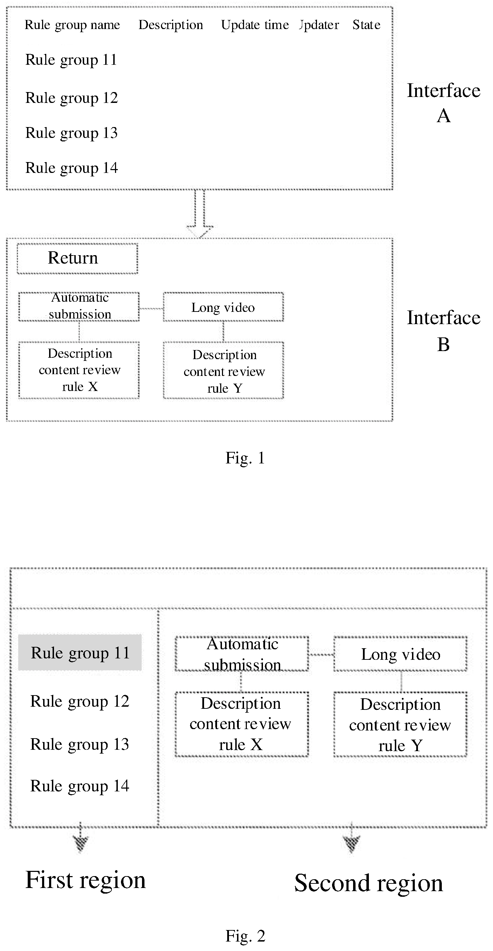

Frequent clicking to return and enter may be illustrated in Fig. 1, which is an interface schematic diagram of a data processing group switching method. As shown in Fig. 1, the schematic diagram includes an interface A and an interface B.

The interface A shows detailed information of a plurality of rule groups, including: rule group names (for example, a rule group 11, a rule group 12, a rule group 13 and a rule group 14), descriptions, update times, updaters, states, and the like.

When the user clicks on any rule group name on the interface A, for example, clicks the rule group 11, the interface A jumps to a rule node page under the rule group 11, that is, the interface B, which includes: automatic submission for review, a long video, description content review rule X, description content review rule Y, and the like.

Afterwards, when the user needs to view other rule groups, the user clicks on a return control on the interface B to return to the interface A, and based on a rule group name to be viewed, the user performs an operation of viewing other rule groups.

It should be understood that in the embodiments of the present disclosure, the data processing group may be a rule group, and the data processing node may be a rule node; the data processing group may be a non-rule group, and the data processing node may be a non-rule node.

Therefore, the above situation has the following technical problems:
1. when the rule group is switched, it is necessary to frequently click to return and enter (that is, click on a related control such as the rule group name); and
2. when part of rule group names are the same, the user cannot perceive which rule group is being viewed in the interface B.

Regarding the above technical problems, the technical conception of the inventor is as follows: in the case where one page may be involved, a plurality of data processing groups may be displayed, and information of data processing nodes in any data processing group may be displayed at the same time, then when any data processing group is clicked on, the information of the data processing nodes is directly switched in the region where the data processing nodes are displayed, so that the above frequent operations of returning and entering may be solved, and only the operations on the data processing groups per se need to be focused on.

The following is the detailed content of embodiments of related methods, devices and the like provided by the present disclosure. It should be understood that the method of the present disclosure is applied to a terminal device, which may be an electronic device with a display function.

Fig. 2 is a first schematic diagram of a graphical user interface provided by an embodiment of the present disclosure. A page displayed on a graphical user interface of the terminal device includes: the first region for displaying data processing groups and the second region for displaying data processing nodes.

It should be understood that in actual application, the content specifically displayed in the first region may be at least one selected from the group consisting of a rule group and a non-rule group, and accordingly, the content specifically displayed in the second region may be at least one selected from the group consisting of a rule node and a non-rule node. Here, Fig. 2 is illustrated only by taking the information related to the rule group in Fig. 1 as an example.

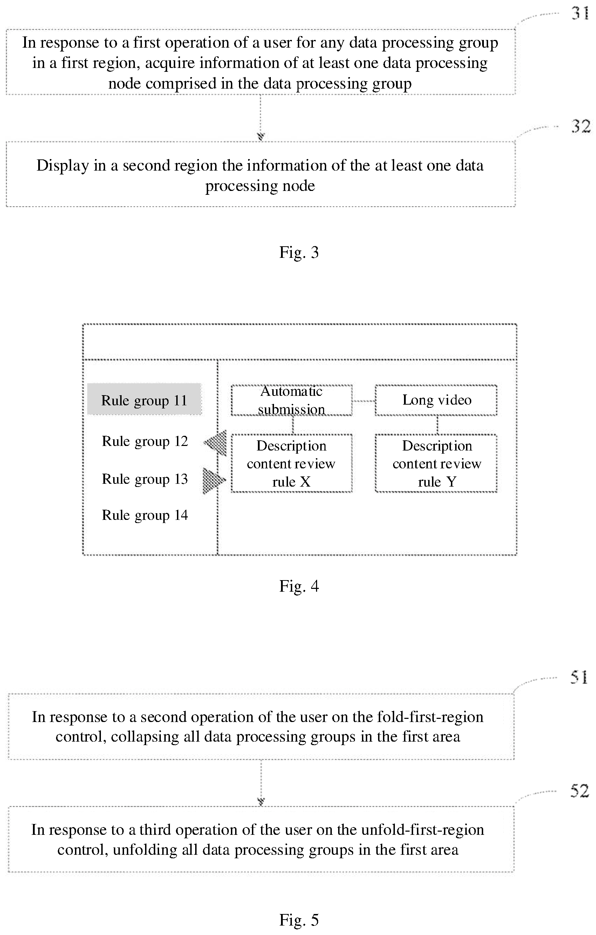

Fig. 3 is a first flow schematic diagram of a data processing group switching method provided by an embodiment of the present disclosure. In conjunction with Fig. 2, as shown in Fig. 3, the data processing group switching method includes:
Step 31: in response to a first operation of a user on any data processing group in the first region, acquiring information of at least one data processing node included in the data processing group.

A plurality of data processing groups are displayed in the first region, and each data processing node includes information used for specifying a data rule.

In this step, when the user needs to perform the information of the at least one data processing node in the data processing group, in response to the first operation of the user on any data processing group in the first region, the terminal device acquires the information of the at least one data processing node in the data processing group corresponding to the first operation.

Under this implementation, an identifier of each data processing group is displayed in the first region, the identifier may be a data processing group name, a description, an update time, etc. Only the data processing group name (taking the rule group name as an example) is listed in Fig. 2, and other identifiers may be added or reduced according to the actual situation.

For example, the first operation may be an operation of clicking on any data processing group, or an operation of selecting the rule group 12 currently, pressing an up key on a keyboard, and switching to the rule group 12, etc.

The plurality of data processing groups may be displayed in the first region in the following manner: the plurality of data processing groups are sequentially arranged in the first region in a drawer manner, that is, a drawer container is used to carry an interaction style of data processing groups to be displayed.

The sequential arrangement may be based on a chronological order, an alphabetical order of names of the data processing groups, etc.

Step 32: displaying the information of the at least one data processing node in the second region.

In this step, after the information of the at least one data processing node included in the data processing group is acquired, the information of the at least one data processing node is displayed in the second region of the page.

Optionally, there are the following possible cases of displaying the information of the at least one data processing node in the second region:
1. If information of at least one data processing node in other data processing group is currently displayed in the second region, switching the information of the at least one data processing node in the other data processing group to the information of the at least one data processing node in a data processing group corresponding to the first operation; and

Under this implementation, the information of the at least one data processing node in the other data processing group currently displayed in the second region is cleared, and the information of the at least one data processing node in the data processing group corresponding to the first operation is rendered and displayed, to implement direct switching of the information of the data processing nodes without performing return and enter operations.

2. In response to no information in the second region, directly displaying the information of the at least one data processing node in the data processing group corresponding to the first operation.

Under this implementation, the information of the at least one data processing node in the data processing group corresponding to the first operation is directly rendered and displayed.

Further, the data processing group corresponding to the first operation in the first region is highlighted.

Under this implementation, it is possible to add a shadow to the name of the data processing group corresponding to the first operation, change the font color of the name of the data processing group corresponding to the first operation, or change the font shape of the name of the data processing group corresponding to the first operation, etc.

In addition, in other regions in Fig. 2, some content such as a software name, an owner name, and a scenario name may be displayed.

It should be understood that the positions of the first region and the second region in Fig. 2 are only examples, and based on the actual situation, there may be other arrangement manners, for example, upper and lower arrangement, etc., which is not limited here.

The data processing group switching method provided by embodiments of the present disclosure includes a first region for displaying data processing groups and a second region for displaying data processing nodes in a page displayed on a graphical user interface of a terminal device. The method includes: in response to a first operation of a user on any data processing group in the first region, acquiring information of at least one data processing node included in the data processing group, where a plurality of data processing groups are displayed in the first region, and each data processing node includes information used for specifying a data rule; and then displaying the information of the at least one data processing node in the second region. In this technical solution, the page is divided into a region where the plurality of data processing groups are distributed and a region corresponding to the data processing nodes in any data processing group, to implement switching only the content in the region corresponding to the data processing nodes in the data processing group when any data processing group is switched to, thereby improving the operation efficiency of the user.

Based on the above embodiments, that is, on the basis of Fig. 2, Fig. 4 is a second schematic diagram of a graphical user interface provided by an embodiment of the present disclosure. As shown in Fig. 4, the page displayed in the graphical user interface of the terminal device further includes: a fold-first-region control S1 (an arrow in Fig. 4 points to the left), and an unfold-first-region control S2 (an arrow in Fig. 4 points to the right).

In a possible implementation, the fold-first-region control and the unfold-first-region control may be one same control, which has different display forms and represents different application functions in different scenarios, without affecting the user's viewing and editing.

Fig. 5 is a second flow schematic diagram of a data processing group switching method provided by an embodiment of the present disclosure. With reference to Fig. 4, as shown in Fig. 5, the data processing group switching method includes:
the step 51 and the step 52, which have on sequence of execution, but are implemented in two scenarios respectively.

Step 51: in response to a second operation of the user on the fold-first-region control, collapsing all data processing groups in the first region.

In this implementation scenario, when the user performs the second operation on the fold-first-region control in the page of the terminal device, the terminal device collapses all data processing groups in the first region and no longer displays the data processing groups in response to this operation. That is, after clicking to collapse, the data processing groups in the first region exist in the page in the form of a control (which may be a button or the like).

For example, the second operation may be an operation of clicking on the fold-first-region control, or an operation of moving a cursor onto the fold-first-region control and keeping for a duration greater than a first preset duration, etc.

Further, after the step 51, the area of the second region is expanded to a preset area in the page.

Under this implementation, in order to improve the user experience, the area of the second region may be expanded to the preset area in the page, and the preset area may include the first region and the second region, so that the user may more clearly view the information of the at least one data processing node in the data processing group corresponding to the first operation.

The preset area may be customized by the user, or a scaling control related to the second region may be designed to adjust the area occupied by the second region in the page in real time.

Step 52: in response to a third operation of the user on the unfold-first-region control, unfolding all data processing groups in the first region.

Under this implementation, when the user needs to view the data processing groups in the first region or needs to switch to other data processing group, etc., the user performs the third operation on the unfold-first-region control in the page of the terminal device, and then the terminal device unfolds all collapsed data processing groups in the first region in response to the third operation, so that each of the data processing groups is displayed in the first region.

For example, the third operation may be an operation of clicking on the unfold-first-region control, or an operation of moving a cursor onto the unfold-first-region control and keeping for a duration greater than a second preset duration, etc.

Further, after the step 52, the initial area of the second region is restored in the page.

Under this implementation, the second region with the preset area is restored to the initial area of the second region.

The data processing group switching method provided by embodiments of the present disclosure includes: in response to a second operation of the user on the fold-first-region control, collapsing all data processing groups in the first region, or in response to the second operation of the user on the fold-first-region control, collapsing all data processing groups in the first region. In this technical solution, the fold-first-region control and the unfold-first-region control are added to the page to achieve the purpose of collapsing and unfolding the data processing groups.

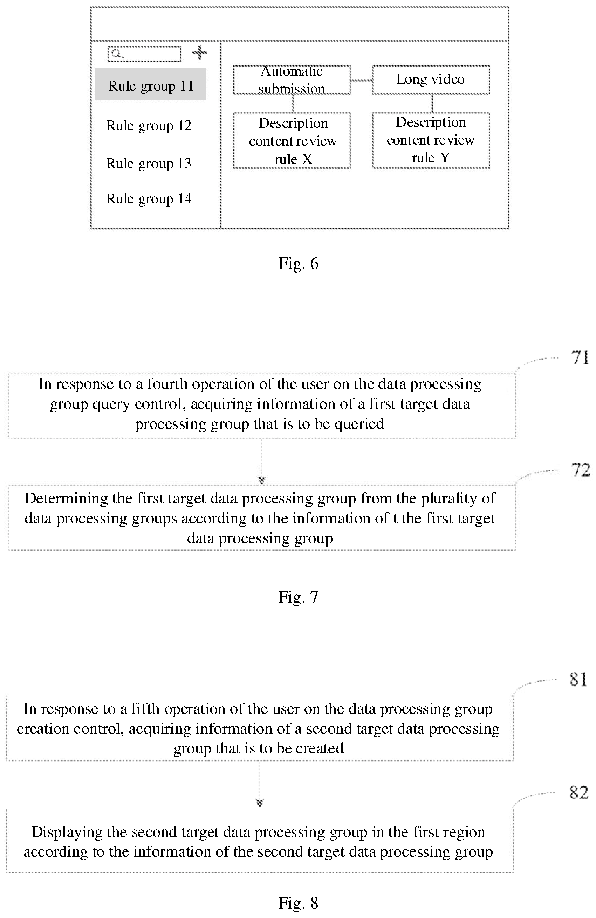

On the basis of the above embodiments and Fig. 2, Fig. 6 is a third schematic diagram of a graphical user interface provided by an embodiment of the present disclosure. As shown in Fig. 6, the page displayed in the graphical user interface of the terminal device further includes: a data processing group query control (as shown in a column box where a magnifier icon is located in Fig. 6), and a data processing group creation control (as shown as a "+" in Fig. 6).

Fig. 7 is a third flow schematic diagram of a data processing group switching method provided by an embodiment of the present disclosure. In conjunction with the data processing group query control in Fig. 6, as shown in Fig. 7, the data processing group switching method includes:
Step 71: in response to a fourth operation of the user on the data processing group query control, acquiring information of a first target data processing group that is to be queried.

In this step, in order to make it more convenient for the user to query a certain data processing group, the data processing group query control may be set. When the user clicks on the column box where the magnifier icon is located in Fig. 6, the user may input the information of the first target data processing group that is to be queried.

In a possible implementation, the information of the first target data processing group that is to be queried may be an identifier of the data processing group, which may be a data processing group name, a description, an update time, etc.

Step 72: determining the first target data processing group from the plurality of data processing groups according to the information of t the first target data processing group.

In this step, based on the information of the first target data processing group, for example, the identifier of the first target data processing group, a data processing group consistent that is consistent with the identifier of the first target data processing group is searched for and determined from the plurality of data processing groups, and the data processing group is used as the first target data processing group.

Further, after the first target data processing group is selected, the information of the at least one data processing node included in the first target data processing group may be displayed in the second region.

Fig. 8 is a fourth flow schematic diagram of a data processing group switching method provided by an embodiment of the present disclosure. In conjunction with the data processing group creation control in Fig. 6, as shown in Fig. 8, the data processing group switching method includes:
Step 81: in response to a fifth operation of the user on the data processing group creation control, acquiring information of a second target data processing group that is to be created.

In this step, in order to make it more convenient for the user to create a new data processing group, the data processing group creation control may be set. When the user clicks on the "+" in Fig. 6, the terminal device starts to acquire the information of the second target data processing group that is to be created based on the information input by the user.

Optionally, as an implementation, it is possible to pop up a display component on the page after the user performs the fifth operation on the data processing group creation control, and the display component is used for the user to input the information of the second target data processing group that is to be created, for example, a name, a description, etc. of the data processing group to be created.

After the user inputs the information of the second target data processing group, the terminal device acquires the information of the second target data processing group and performs the following operation.

Step 82: displaying the second target data processing group in the first region according to the information of the second target data processing group.

In this step, after the information of the second target data processing group is obtained as described above, the second target data processing group is displayed in the first region, for example, the name, the description, etc. of the second target data processing group are displayed.

In addition, in the page, there may also be a control for deleting the data processing group, a control for modifying the data processing group, etc., which are implemented by similar principles.

The data processing group switching method provided by embodiments of the present disclosure includes: in response to a fourth operation of a user on a data processing group query control, acquiring information of the first target data processing group that is to be queried, and determining the first target data processing group from the plurality of data processing groups according to the information of the first target data processing group; and in response to a fifth operation of the user on the data processing group creation control, acquiring information of a second target data processing group that is to be created, and displaying the second target data processing group in the first region according to the information of the second target data processing group. In this technical solution, with the data processing group query control and the data processing group creation control, the purpose of creating a new data processing group and querying the data processing group is achieved.

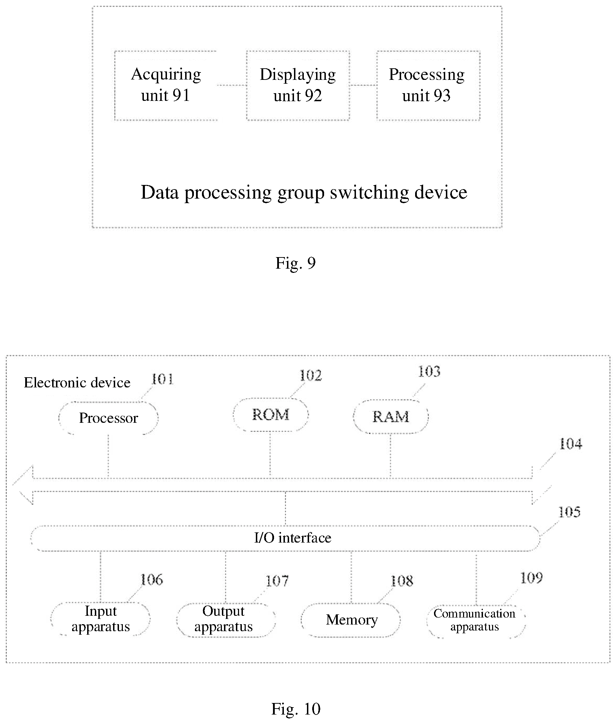

Based on the above method embodiments, a page displayed on a graphical user interface of a terminal device includes a first region for displaying rule groups and a second region for displaying rule nodes. Fig. 9 is a structural schematic diagram of a data processing group switching device provided by an embodiment of the present disclosure. As shown in Fig. 9, the data processing group switching device includes: an acquiring unit 91 and a displaying unit 92.

The acquiring unit 91 is configured to, in response to a first operation of a user on any data processing group in the first region, acquire information of at least one data processing node included in the data processing group, where the plurality of data processing groups are displayed in the first region, and each data processing node includes information used for specifying a data rule.

The displaying unit 92 is configured to display the information of the at least one data processing node in the second region.

According to one or more embodiments of the present disclosure, the displaying unit 92 is further configured to:
highlight a data processing group corresponding to the first operation in the first region.

According to one or more embodiments of the present disclosure, the displaying unit 92 is further configured to:
if information of at least one data processing node in other data processing group is currently displayed in the second region, switch the information of the at least one data processing node in the other data processing group to the information of at least one data processing node in a data processing group corresponding to the first operation.

According to one or more embodiments of the present disclosure, the page further includes: a fold-first-region control, and the displaying unit 92 is further configured to:
in response to a second operation of the user on the fold-first-region control, collapse all data processing groups in the first region; and
accordingly, the page further includes: an unfold-first-region control, and the displaying unit 92 is further configured to:
   in response to a third operation of the user on the unfold-first-region control, unfold all data processing groups in the first region.

According to one or more embodiments of the present disclosure, after collapsing all data processing groups in the first region in response to a second operation of the user on the fold-first-region control, the displaying unit 92 is further configured to:
expand an area of the second region to a preset area in the page; and
accordingly, after unfolding all data processing groups in the first region in response to a third operation of the user on the unfold-first-region control, the displaying unit 92 is further configured to:
   restore an initial area of the second region in the page.

According to one or more embodiments of the present disclosure, the page further includes: a data processing group query control, and a processing unit 93 is configured to:
in response to a fourth operation of the user on the data processing group query control, acquire information of a first target data processing group that is to be queried; and
determine the first target data processing group from the plurality of data processing groups according to the information of the first target data processing group.

According to one or more embodiments of the present disclosure, the page further includes: a data processing group creation control, and the processing unit 93 is configured to:
in response to a fifth operation of the user on the data processing group creation control, acquire information of a second target data processing group that is to be created; and
display the second target data processing group in the first region according to the information of the second target data processing group.

The technical solutions and technical effects of the data processing group switching device provided by embodiments of the present disclosure are similar to those in the above embodiments, and details are not repeated here.

In order to implement the above embodiments, embodiments of the present disclosure further provide an electronic device. Fig. 10 is a structural schematic diagram of an electronic device provided by an embodiment of the present disclosure. Referring to Fig. 10, the electronic device may be a terminal device.

The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and fixed terminals such as a digital TV, a desktop computer, etc. The electronic device shown in Fig. 10 is only an example, and should not impose any limitation on the functions and the range of use of the embodiments of the present disclosure.

As shown in Fig. 10, the electronic device may include a processor (such as a central processing unit, a graphics processor and the like) 101, which may perform various appropriate actions and processing according to a program stored in a read-only memory (abbreviated as ROM) 102 or a program loaded from a memory 108 into a random access memory (abbreviated as RAM) 103. The RAM 103 further stores various programs and data required for operations of the electronic device. The processor 101, the ROM 102 and the RAM 103 are interconnected by means of a bus 104. An input/output (I/O) interface 105 is also connected to the bus 104.

Usually, the following apparatuses may be connected to the I/O interface 105: an input apparatus 106 including, for example, a touch screen, a touchpad, a keyboard, a mouse, a camera, a microphone, an accelerometer, a gyroscope, etc.; an output apparatus 107 including, for example, a liquid crystal display (Liquid Crystal Display, LCD for short), a speaker, a vibrator, etc.; a memory 108 including, for example, a magnetic tape, a hard disk, etc.; and a communication apparatus 109. The communication apparatus 109 may allow the electronic device to be in wireless or wired communication with other devices to exchange data. Although Fig. 10 shows the electronic device having various apparatuses, it should be understood that it is not required to implement or provide all of the illustrated apparatuses. More or fewer apparatuses may be implemented or provided alternatively.

In particular, according to the embodiments of the present disclosure, the process described above with reference to the flowcharts may be implemented as a computer software program. For example, the embodiments of the present disclosure include a computer program product, which includes a computer program carried on a computer-readable medium, and the computer program contains program codes for performing the method shown in the flowchart. In such an embodiment, the computer program may be downloaded online and installed through the communication apparatus 109, or installed from the memory 108, or installed from the ROM 102. When the computer program is executed by the processor 101, the above functions defined in the method of the embodiments of the present disclosure are executed.

It should be noted that the above computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated on a baseband or as a part of a carrier wave, and computer-readable program codes are carried therein. This propagated data signal may take a variety of forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit the program for use by or in combination with the instruction execution system, apparatus or device. The program codes contained on the computer-readable medium may be transmitted by any suitable medium, including but not limited to: a wire, an optical cable, RF (radio frequency), etc., or any suitable combination of the above.

The above computer-readable medium may be included in the above electronic device, or may exist alone without being assembled into the electronic device.

The above computer-readable medium carries one or more programs, and when the one or more programs are executed by the electronic device, the electronic device is caused to execute the method shown in the above embodiments.

The computer program codes for performing the operations of the present disclosure may be written in one or more programming languages or a combination thereof, where the programming languages include object-oriented programming languages such as Java, Smalltalk, C++, and also include conventional procedural programming languages such as "C" language or similar programming languages. The program codes may be executed entirely on a computer of a user, partly on the computer of the user, as a stand-alone software package, partly on the computer of the user and partly on a remote computer, or entirely on the remote computer or a server. In the case of involving the remote computer, the remote computer may be connected to the computer of the user through any kind of network, including a local area network (abbreviated as LAN) or a wide area network (abbreviated as WAN), or may be connected to an external computer (for example, connected via the Internet using an Internet service provider).

The flowcharts and block diagrams in the drawings illustrate the possibly implemented architectures, functions and operations of the system, the method and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in embodiments of the present disclosure may be implemented by software or by hardware. The name of a unit does not constitute a limitation on the unit itself under certain circumstances, for example, the acquiring unit may also be described as "a unit for obtaining at least two internet protocol addresses".

The functions described above herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD) and the like.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium will include an electrical connection based on one or more lines, a portable computer magnetic disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any suitable combination of the above.

According to one or more embodiments of the present disclosure, a data processing group switching method is provided. A page displayed on a graphical user interface of a terminal device includes a first region for displaying data processing groups and a second region for displaying data processing nodes. The method includes:
in response to a first operation of a user on any data processing group in the first region, acquiring information of at least one data processing node included in the data processing group, where the plurality of data processing groups are displayed in the first region, and each data processing node includes information used for specifying a data rule; and
displaying the information of the at least one data processing node in the second region.

According to one or more embodiments of the present disclosure, the method further includes:
highlighting a data processing group corresponding to the first operation in the first region.

According to one or more embodiments of the present disclosure, the displaying the information of the at least one data processing node in the second region includes:
if the information of at least one data processing node in other data processing group is currently displayed in the second region, switching the information of the at least one data processing node in the other data processing group to the information of the at least one data processing node in a data processing group corresponding to the first operation.

According to one or more embodiments of the present disclosure, the page further includes: a fold-first-region control, and the method further includes:
in response to a second operation of the user on the fold-first-region control, collapsing all data processing groups in the first region; and
accordingly, the page further includes: an unfold-first-region control, and the method further includes:
   in response to a third operation of the user on the unfold-first-region control, unfolding all data processing groups in the first region.

According to one or more embodiments of the present disclosure, after the in response to a second operation of the user on the fold-first-region control, collapsing all data processing groups in the first region, the method further includes:
expanding an area of the second region to a preset area in the page; and
accordingly, after the in response to a third operation of the user on the unfold-first-region control, unfolding all data processing groups in the first region, the method further includes:
   restoring an initial area of the second region in the page.

According to one or more embodiments of the present disclosure, the page further includes: a data processing group query control, and the method further includes:
in response to a fourth operation of the user on the data processing group query control, acquiring information of a first target data processing group that is to be queried; and
determining the first target data processing group from the plurality of data processing groups according to the information of the first target data processing group.

According to one or more embodiments of the present disclosure, the page further includes: a data processing group creation control, and the method further includes:
in response to a fifth operation of the user on the data processing group creation control, acquiring information of a second target data processing group that is to be created; and
displaying the second target data processing group in the first region according to the information of the second target data processing group.

According to one or more embodiments of the present disclosure, a data processing group switching device is provided. A page displayed on a graphical user interface of a terminal device includes a first region for displaying data processing groups and a second region for displaying data processing nodes. The device includes an acquiring unit and a displaying unit.

The acquiring unit is configured to, in response to a first operation of a user on any data processing group in the first region, acquire information of at least one data processing node included in the data processing group, where the plurality of data processing groups are displayed in the first region, and each data processing node includes information for specifying a data rule; and
The displaying unit is configured to display the information of the at least one data processing node in the second region.

According to one or more embodiments of the present disclosure, the displaying unit is further configured to:
highlight a data processing group corresponding to the first operation in the first region.

According to one or more embodiments of the present disclosure, the displaying unit is further configured to:
if information of at least one data processing node in other data processing group is currently displayed in the second region, switch the information of the at least one data processing node in the other data processing group to the information of the at least one data processing node in the data processing group corresponding to the first operation.

According to one or more embodiments of the present disclosure, the page further includes: a fold-first-region control, and the displaying unit is further configured to:
in response to a second operation of the user on the fold-first-region control, collapse all data processing groups in the first region; and
accordingly, the page further includes: an unfold-first-region control, and the displaying unit is further configured to:
   in response to a third operation of the user on the unfold-first-region control, unfold all data processing groups in the first region.

According to one or more embodiments of the present disclosure, after the in response to a second operation of the user on the fold-first-region control, collapsing all data processing groups in the first region, the displaying unit is further configured to:
expand an area of the second region to a preset area in the page; and
accordingly, after the in response to a third operation of the user on the unfold-first-region control, unfold all data processing groups in the first region, the displaying unit is further configured to:
   restore an initial area of the second region in the page.

According to one or more embodiments of the present disclosure, the page further includes: a data processing group query control, and a processing unit is configured to:
in response to a fourth operation of the user on the data processing group query control, acquire information of a first target data processing group that is to be queried; and
determine the first target data processing group from the plurality of data processing groups according to the information of the first target data processing group.

According to one or more embodiments of the present disclosure, the page further includes: a data processing group creation control, and the processing unit is configured to:
in response to a fifth operation of the user on the data processing group creation control, acquire information of a second target data processing group that is to be created; and
display the second target data processing group in the first region according to the information of the second target data processing group.

According to one or more embodiments of the present disclosure, an electronic device is provided. The electronic device includes: at least one processor and a memory,
where the memory stores computer-executable instructions; and
the at least one processor executes the computer-executable instructions stored in the memory to cause the at least one processor to execute the data processing group switching method according to any of the above embodiments.

According to one or more embodiments of the present disclosure, a computer-readable storage medium is provided. The computer-readable storage medium stores computer-executable instructions which, when executed by a processor, implement the data processing group switching method according to any of the above embodiments.

According to one or more embodiments of the present disclosure, a computer program product is provided. The computer program product includes a computer program which, when executed by a processor, implements the data processing group switching method according to any of the above embodiments.

The above description only illustrates preferred embodiments of the present disclosure and applied technical principles. Those skilled in the art should understand that the disclosed scope involved in the present disclosure is not limited to the technical solutions obtained by the specific combination of the above technical features, and should also cover other technical solutions obtained by arbitrary combination of the above technical features or their equivalent features without departing from the above disclosed concept, for example, a technical solution formed by replacing the above features with technical features with similar functions disclosed in the present disclosure (but not limited thereto).

In addition, although the operations are depicted in a specific order, this should not be understood as requiring the operations to be executed in the specific order shown or in a sequential order. Under certain circumstances, multitasking and parallel processing may be advantageous. Similarly, although the above discussion contains a number of specific implementation details, these should not be interpreted as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. Conversely, the specific features and actions described above are only exemplary forms of implementing the claims.

## Claims

1. A data processing group switching method, wherein a page displayed on a graphical user interface of a terminal device comprises a first region for displaying data processing groups and a second region for displaying data processing nodes, and the method comprises:
in response to a first operation of a user on any data processing group in the first region, acquiring information of at least one data processing node comprised in the data processing group, wherein a plurality of data processing groups are displayed in the first region, and each data processing node comprises information used for specifying a data rule; and
displaying the information of the at least one data processing node in the second region.

2. The method of claim 1, further comprising:
highlighting a data processing group corresponding to the first operation in the first region.

3. The method of claim 1 or 2, wherein the displaying the information of the at least one data processing node in the second region, comprises:
if information of at least one data processing node in other data processing group is currently displayed in the second region, switching the information of the at least one data processing node in the other data processing group to the information of at least one data processing node in a data processing group corresponding to the first operation.

4. The method of claim 1 or 2, wherein the page further comprises a fold-first-region control, and the method further comprises:
in response to a second operation of the user on the fold-first-region control, collapsing all data processing groups in the first region; and
the page further comprises an unfold-first-region control, and the method further comprises:
in response to a third operation of the user on the unfold-first-region control, unfolding all data processing groups in the first region.

5. The method of claim 4, wherein after the in response to a second operation of the user on the fold-first-region control, collapsing all data processing groups in the first region, the method further comprises:
expanding an area of the second region to a preset area in the page; and
after the in response to a third operation of the user on the unfold-first-region control, unfolding all data processing groups in the first region, the method further comprises:
restoring an initial area of the second region in the page.

6. The method of claim 1 or 2, wherein the page further comprises a data processing group query control, and the method further comprises:
in response to a fourth operation of the user on the data processing group query control, acquiring information of a first target data processing group that is to be queried; and
determining the first target data processing group from the plurality of data processing groups according to the information of the first target data processing group.

7. The method of claim 1 or 2, wherein the page further comprises a data processing group creation control, and the method further comprises:
in response to a fifth operation of the user on the data processing group creation control, acquiring information of a second target data processing group that is to be created; and
displaying the second target data processing group in the first region according to the information of the second target data processing group.

8. A data processing group switching device, wherein a page displayed on a graphical user interface of a terminal device comprises a first region for displaying data processing groups and a second region for displaying data processing nodes, and the device comprises:
an acquiring unit, configured to, in response to a first operation of a user on any data processing group in the first region, acquire information of at least one data processing node comprised in the data processing group, wherein a plurality of data processing groups are displayed in the first region, and each data processing node comprises information used for specifying a data rule; and
a displaying unit, configured to display the information of the at least one data processing node in the second region.

9. An electronic device, comprising: a processor and a memory,
wherein the memory stores computer-executable instructions; and
the processor executes the computer-executable instructions stored in the memory, to cause the processor to execute the data processing group switching method of any one of claims 1 to 7.

10. A computer-readable storage medium, wherein the computer-readable storage medium stores computer-executable instructions, when the computer-executable instructions are executed by a processor, the processor is caused to implement the data processing group switching method of any one of claims 1 to 7.

11. A computer program product, comprising a computer program, when the computer program is executed by a processor, the processor is caused to implement the data processing group switching method of any one of claims 1 to 7.
